# EUROPEAN PATENT APPLICATION

(11) **EP 3 982 103 A1**
(43) Date of publication of application: **13.04.2022**
(21) Application number: 21156251.7
(22) Date of filing: 10.02.2021
(51) Int. Cl.: G01M 13/025

(54) **REDUCER ANGULAR TRANSMISSION ACCURACY TESTER**

(30) Priority: 12.10.2020 TW 109213302 U
(71) Applicant: Tung Pei Industrial Co., Ltd., Tapei City 106 (TW)
(72) Inventor: CHIU, Wan-Ting, 320 Taoyuan City (TW)
(74) Representative: Viering, Jentschura & Partner mbB Patent- und Rechtsanwälte

(57) **Abstract**

A reducer angular transmission accuracy tester includes a carrier (1), an input bearing seat (2), an output bearing seat (3), an input end encoder (4), an output end encoder (5), a first motor (6), a second motor (7), and a first torsionmeter (8). The carrier (1) is disposed between the input bearing seat (2) and the output bearing seat (3), the input bearing seat (2) and the input end encoder (4) are disposed between the carrier (1) and the first motor (6), the first motor (6) is connected to the carrier (1) and the to-be-tested reducer (100) via an input shaft (30), and the input shaft (30) corresponds to the input end encoder (4). The output bearing seat (3) and the output end encoder (5) are disposed between the carrier (1) and the second motor (7), the second motor (7) is connected to the carrier (1) and the to-be-tested reducer (100) via an output shaft (60), the output shaft (60) corresponds to the output end encoder (5), and the first torsionmeter (8) is connected to the second motor (7).

## Description

### CROSS-REFERENCE TO RELATED PATENT APPLICATION

This application claims the benefit of priority to Taiwan Patent Application No. 109213302, filed on October 12, 2020. The entire content of the above identified application is incorporated herein by reference.

Some references, which may include patents, patent applications and various publications, may be cited and discussed in the description of this disclosure. The citation and/or discussion of such references is provided merely to clarify the description of the present disclosure and is not an admission that any such reference is "prior art" to the disclosure described herein. All references cited and discussed in this specification are incorporated herein by reference in their entireties and to the same extent as if each reference was individually incorporated by reference.

### FIELD OF THE DISCLOSURE

The present disclosure relates to a reducer angular transmission accuracy tester, and more particularly to a reducer testing device for testing angular transmission accuracy, efficiency, rigidity, moment, etc.

### BACKGROUND OF THE DISCLOSURE

A harmonic reducer mainly includes a wave generator, a spline cup, and a circular spline ring, and a harmonic drive transmission of the harmonic drive is operated through micro-elastic-deformation of the spline cup pushing and squeezing against each other for transmission of power. Angular transmission accuracy and rigidity tests usually need to be performed upon harmonic reducers that have been manufactured. However, conventional reducer testers usually only have a simple function, which makes purchasing multiple testers necessary, thereby inevitably causing increased costs and inconvenience in usage.

### SUMMARY OF THE DISCLOSURE

In response to the above-referenced technical inadequacies, the present disclosure provides a reducer angular transmission accuracy tester, which can perform various tests on angular transmission accuracy and rigidity, thereby having preferable applicability, enhanced usage convenience, and a reduced cost in purchasing testers.

In one aspect, the present disclosure provides a reducer angular transmission accuracy tester for testing a to-be-tested reducer, and the to-be-tested reducer has an input end and an output end. The reducer angular transmission accuracy tester includes: a carrier for carrying the to-be-tested reducer, the to-be-tested reducer being disposed in the carrier, and the input end and the output end of the to-be-tested reducer being connected to the carrier; an input bearing seat; an output bearing seat, the carrier being disposed between the input bearing seat and the output bearing seat; an input end encoder, the input end encoder being an angular encoder; an output end encoder, the output end encoder being another angular encoder; a first motor, the input bearing seat and the input end encoder being disposed between the carrier and the first motor, the first motor being connected to the carrier and the to-be-tested reducer via an input shaft, the input shaft being disposed on the input bearing seat, and the input shaft corresponding to the input end encoder; a second motor, the output bearing seat and the output end encoder being disposed between the carrier and the second motor, the second motor being connected to the carrier and the to-be-tested reducer via an output shaft, the output shaft being disposed on the output bearing seat, and the output shaft corresponds to the output end encoder; and a first torsionmeter connected to the second motor. The first motor drives the input end of the to-be-tested reducer through the input shaft and drives the output shaft through the output end of the to-be-tested reducer, and the input end encoder and the output end encoder capture signals of the input end and the output end, respectively, so as to measure an angular transmission accuracy. The second motor drives the output end of the to-be-tested reducer and applies a turning moment to the output end, and the first torsionmeter captures a torsion signal to perform a rigidity test.

One of the beneficial effects of the reducer angular transmission accuracy tester of the present disclosure is that the reducer angular transmission accuracy tester includes a carrier, an input bearing seat, an output bearing seat, an input end encoder, an output end encoder, a first motor, a second motor, and a first torsionmeter. The first motor can drive the input end of the to-be-tested reducer through the input shaft, and drive the output shaft through the output end of the to-be-tested reducer. The input end encoder and the output end encoder capture the signals of the input end and the output end, respectively, so as to measure the angular transmission accuracy. The second motor can drive the output end of the to-be-tested reducer and apply the turning moment to the output end. The first torsionmeter then captures the torsion signal for a rigidity test. The reducer angular transmission accuracy tester of the present disclosure can perform various tests on angular transmission accuracy and rigidity. Therefore, the reducer angular transmission accuracy tester has preferable applicability, enhanced usage convenience, and a reduced cost in purchasing testers. Furthermore, the carrier can be used to carry the to-be-tested reducer, the to-be-tested reducer is disposed in the carrier, and the input end and the output end of the to-be-tested reducer are connected to the carrier, thereby stabilizing the to-be-tested reducer and improving the accuracy of the tests.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The described embodiments may be better understood by reference to the following description and the accompanying drawings, in which:
FIG. 1 is a schematic view of a reducer angular transmission accuracy tester of the present disclosure;
FIG. 2 is a schematic view of a to-be-tested reducer of the present disclosure;
FIG. 3 is a schematic view of an input adapter shaft of the present disclosure;
FIG. 4 is a schematic view of an affixing adapter seat of the present disclosure; and
FIG. 5 is a schematic view of an output adapter board of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

### [Embodiment]

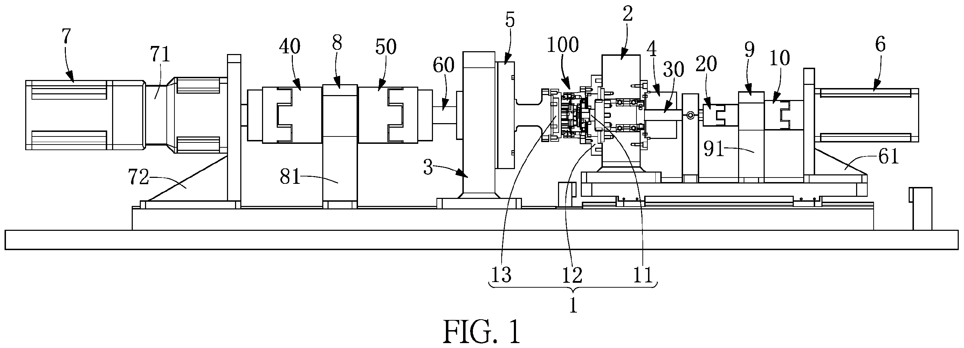

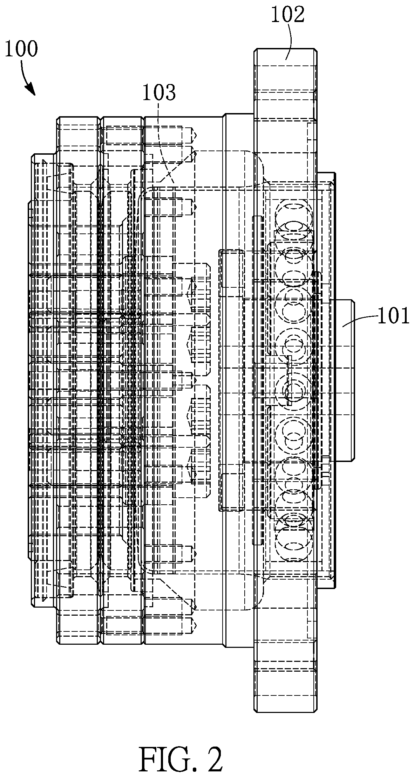

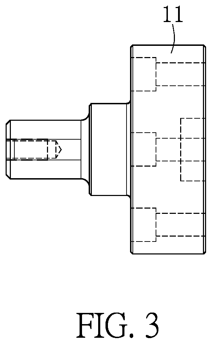

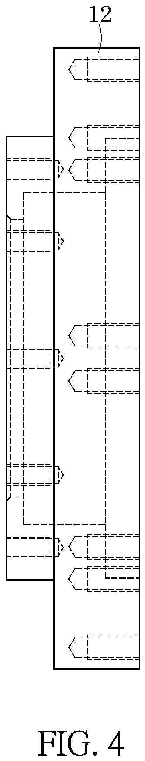

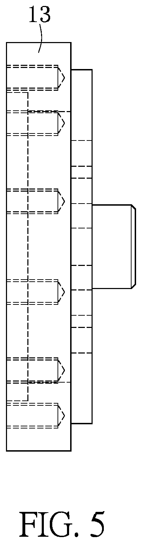

Referring to FIG. 1 to FIG. 5, a reducer angular transmission accuracy tester including a carrier 1, an input bearing seat 2, an output bearing seat 3, an input end encoder 4, an output end encoder 5, a first motor 6, a second motor 7, and a first torsionmeter 8 is provided in the present disclosure.

The carrier 1 can be used to carry a to-be-tested reducer 100, a type of the to-be-tested reducer 100 is not limited, and the to-be-tested reducer 100 has an input end and an output end. In this embodiment, the to-be-tested reducer 100 is a harmonic reducer including a wave generator 101, a circular spline ring 102, and a spline cup 103, the wave generator 101 and the spline cup 103 serve as the input end and the output end, respectively.

The carrier 1 (i.e., jig), is disposed between the input bearing seat 2 and the output bearing seat 3. The carrier 1 can be used to carry the to-be-tested reducer 100 and have the to-be-tested reducer 100 disposed between the input bearing seat 2 and the output bearing seat 3, and the input end and the output end of the to-be-tested reducer 100 are connected to the carrier 1, such that the to-be-tested reducer 100 is stably disposed in the carrier 1.

The carrier 1 can include an input adapter shaft 11, an affixing adapter seat 12, and an output adapter board 13. The affixing adapter seat 12 is fixedly disposed on the input bearing seat 2, and the circular spline ring 102 of the to-be-tested reducer 100 can be fixed to the affixing adapter seat 12. The input adapter shaft 11 can be rotationally disposed on the affixing adapter seat 12, and the input shaft 30 and the wave generator 101 (i.e., the input end) of the to-be-tested reducer 100 are connected to each other via the input adapter shaft 11. Preferably, the input adapter shaft 11 is pivotally disposed in the affixing adapter seat 12, such that two ends of the input adapter shaft 11 are respectively connected to an end of the input shaft 30 and the wave generator 101. When the first motor 6 starts up, the first motor 6 can drive the wave generator 101 through the input shaft 30 and the input adapter shaft 11, such that the to-be-tested reducer 100 can be tested. The spline cup 103 (i.e., the output end) of the to-be-tested reducer 100 and the output shaft 60 can be connected to each other via the output adapter board 13.

The input encoder 4 and the output end encoder 5 are disposed on the input bearing seat 2 and the output bearing seat 3, respectively, the input end encoder 4 is disposed on a side of the input bearing seat 2 away from the carrier 1, and the output end encoder 5 is disposed on a side of the output bearing seat 3 near the carrier 1. The input end encoder 4 and the output end encoder 5 are angular encoders, which can simultaneously capture angular signals of the input end and the output end. The output adapter board 13 is disposed between the to-be-tested reducer 100 and the output end encoder 5, such that signals of the output end of the to-be-tested reducer 100 can be transmitted to the output end encoder 5.

The first motor 6 is disposed on one side of the input bearing seat 2 away from the carrier 1, the input bearing seat 2 and the input end encoder 4 are disposed between the carrier 1 and the first motor 6, and the first motor 6 can be disposed on a motor seat 61. The first motor 6 is connected to the carrier 1 and the to-be-tested reducer 100 via the input shaft 30. That is, the first motor 6 can be connected to the input adapter shaft 11 of the carrier 1 through a first shaft connector 10, a second shaft connector 20, and the input shaft 30, such that the first motor 6 is connected to the wave generator 101 of the to-be-tested reducer 100 via the input adapter shaft 11. The input shaft 30 is pivotally disposed on the input bearing seat 2, and the input shaft 30 corresponds to the input end encoder 4, such that the input end encoder 4 captures the angular signals of the input end.

The second motor 7 is disposed on one side of the output bearing seat 3 away from the carrier 1, and the output bearing seat 3 and the output end encoder 5 are disposed between the carrier 1 and the second motor 7. The second motor 7 can also be connected to a gear reducer 71, so as to output reducing momentum through the gear reducer 7. The second motor 7 and the gear reducer 71 can be disposed on a gear reducer mount 72. The second motor 7 is connected to the carrier 1 and the to-be-tested reducer 100 via the output shaft 60. That is, the gear reducer 71 of the second motor 7 can be connected to the output adapter board 13 of the carrier 1 through a third shaft connector 40, a fourth shaft connector 50, and the output shaft 60, such that the second motor 7 is connected to the spline cup 103 of the to-be-tested reducer 100 via the output adapter board 13. The output shaft 60 is pivotally disposed on the output bearing seat 3, and the output shaft 60 corresponds to the output end encoder 5, such that the output end encoder 5 captures the angular signals of the output end. In this embodiment, the input shaft 30 and the output shaft 60 are coaxial with each other.

The first torsionmeter 8 is a torsion sensor, and the first torsionmeter 8 is connected to the second motor 7. The first torsionmeter 8 can be disposed between the output end encoder 5 and the second motor 7, and be fixed on a first mount 81. The second motor 7 can be connected to the to-be-tested reducer 100 through the first torsionmeter 8 and the output adapter board 13, and when the second motor 7 starts up, the second motor 7 can drive the to-be-tested reducer 100 via the output adapter board 13.

The first motor 6 can be connected to the wave generator 101 of the to-be-tested reducer 100 through the input shaft 30, the input adapter shaft 11, etc. Therefore, when the first motor 6 starts up, the wave generator 101 can be driven by the input adapter shaft 11, and the input end encoder 4 can capture the angular signals of the input end. In addition, power can be output by the spline cup 103 of the to-be-tested reducer 100, and the output shaft 60 can be driven by the output adapter board 13, and the output end encoder 5 can capture the angular signals of the output end.

The reducer angular transmission accuracy tester of the present disclosure can further include a second torsionmeter 9 connected to the first motor 6, the second torsionmeter 9 is a torsion sensor, and the second torsionmeter 9 is disposed between the input end encoder 4 and the first motor 6. The second torsionmeter 9 can be fixed on a second mount 91, and the second torsionmeter 9 can be adopted for other test requirements.

The first motor 6 provided in the present disclosure can drive the input end (i.e., the wave generator 101) of the to-be-tested reducer 100 through the input shaft 30 and the input adapter shaft 11, and drive the output shaft 60 through the output end (i.e., the spline cup 103) of the to-be-tested reducer 100. When a random rotation angle is input by the to-be-tested reducer 100, the input end encoder 4 and the output end encoder 5 can capture the signals of the input end and the output end, respectively, and then output results by software programs, so as to perform a test measuring the angular transmission accuracy.

The second motor 7 provided in the present disclosure can drive the output end (i.e., the spline cup 103) of the to-be-tested reducer 100, the input end (i.e., the wave generator 101) can be fixed to the second motor 7, and the second motor 7 can apply a turning moment to the output end. The first torsionmeter 8 can then capture a torsion signal, and the results can be output by the software program for a rigidity test. In addition, the reducer angular transmission accuracy tester provided in the present disclosure can also be used for tests, e.g. efficiency tests, turning moment tests, etc.

### [Beneficial Effects of the Embodiment]

One of the beneficial effects of the reducer angular transmission accuracy tester of the present disclosure is that the reducer angular transmission accuracy tester includes a carrier, an input bearing seat, an output bearing seat, an input end encoder, an output end encoder, a first motor, a second motor, and a first torsionmeter. The first motor can drive the input end of the to-be-tested reducer through the input shaft, and drive the output shaft through the output end of the to-be-tested reducer. The input end encoder and the output end encoder capture the signals of the input end and the output end, respectively, so as to measure the angular transmission accuracy. The second motor can drive the output end of the to-be-tested reducer and apply the turning moment to the output end. The first torsionmeter then captures the torsion signal for a rigidity test. The reducer angular transmission accuracy tester of the present disclosure can perform various tests on angular transmission accuracy, efficiency, rigidity, and turning moment. Therefore, the reducer angular transmission accuracy tester has preferable applicability, enhanced usage convenience, and a reduced cost in purchasing testers. Furthermore, the carrier can be used to carry the to-be-tested reducer, such that the to-be-tested reducer is disposed in the carrier, and the input end and the output end of the to-be-tested reducer are connected to the carrier, thereby stabilizing the to-be-tested reducer and improving the accuracy of the tests.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A reducer angular transmission accuracy tester for testing a to-be-tested reducer (100), the to-be-tested reducer (100) having an input end and an output end, and the reducer angular transmission accuracy tester comprising:
a carrier (1) for carrying the to-be-tested reducer (100), wherein the to-be-tested reducer (100) is disposed in the carrier (1), and the input end and the output end of the to-be-tested reducer (100) is connected to the carrier (1);
an input bearing seat (2);
an output bearing seat (3), the carrier (1) being disposed between the input bearing seat (2) and the output bearing seat (3);
an input end encoder (4), the input end encoder (4) being an angular encoder;
an output end encoder (5), the output end encoder (5) being another angular encoder;
a first motor (6), the input bearing seat (2) and the input end encoder (4) being disposed between the carrier (1) and the first motor (6), the first motor (6) being connected to the carrier (1) and the to-be-tested reducer (100) via an input shaft (30), wherein the input shaft (30) is disposed on the input bearing seat (2), and the input shaft (30) corresponds to the input end encoder (4);
a second motor (7), the output bearing seat (3) and the output end encoder (5) being disposed between the carrier (1) and the second motor (7), the second motor (7) being connected to the carrier (1) and the to-be-tested reducer (100) via an output shaft (60), wherein the output shaft (60) is disposed on the output bearing seat (3), and the output shaft (60) corresponds to the output end encoder (5); and
a first torsionmeter (8) connected to the second motor (7);
wherein the first motor (6) drives the input end of the to-be-tested reducer (100) through the input shaft (30) and drives the output shaft (60) through the output end of the to-be-tested reducer (100), and the input end encoder (4) and the output end encoder (5) capture signals of the input end and the output end, respectively so as to measure an angular transmission accuracy, and wherein the second motor (7) drives the output end of the to-be-tested reducer (100) and applies a turning moment to the output end, and the first torsionmeter (8) captures a torsion signal to perform a rigidity test.

2. The reducer angular transmission accuracy tester according to claim 1, wherein the to-be-tested reducer (100) is a harmonic reducer, and the to-be-tested reducer (100) includes a wave generator (101), a circular spline ring (102), and a spline cup (103), the wave generator (101) and the spline cup (103) serve as the input end and the output end, respectively.

3. The reducer angular transmission accuracy tester according to claim 2, wherein the carrier (1) includes an input adapter shaft (11), an affixing adapter seat (12), and an output adapter board (13), the affixing adapter seat (12) is fixedly disposed on the input bearing seat (2), the circular spline ring (102) of the to-be-tested reducer (100) is fixed to the affixing adapter seat (12), such that the input adapter shaft (11) is rotationally fixed on the affixing adapter seat (12), and wherein the wave generator (101) and the input shaft (30) of the to-be-tested reducer (100) are connected to each other via the input adapter shaft (11), and the spline cup (103) and the output shaft (60) of the to-be-tested reducer (100) are connected to each other via the output adapter board (13).

4. The reducer angular transmission accuracy tester according to claim 3, wherein the first motor (6) is disposed on a motor seat (61), the first motor (6) is connected to the input adapter shaft (11) through a first shaft connector (10), a second shaft connector (20), and the input shaft (30).

5. The reducer angular transmission accuracy tester according to claim 3, wherein the second motor (7) is connected to a gear reducer (71), the second motor (7) and the gear reducer (71) are disposed on a gear reducer mount (72), and the gear reducer (71) is connected to the output adapter board (13) through a third shaft connector (40), a fourth connector (50), and the output shaft (60).

6. The reducer angular transmission accuracy tester according to claim 3, wherein the input adapter shaft (11) is disposed in the affixing adapter seat (12), and two ends of the input adapter shaft (11) are connected to an end of the input shaft (30) and the wave generator (101), respectively.

7. The reducer angular transmission accuracy tester according to claim 1, wherein the input end encoder (4) and the output end encoder (5) are disposed on the input bearing seat (2) and the output bearing seat (3), respectively, the input end encoder (4) is disposed on a side of the input bearing seat (2) away from the carrier (1), and the output end encoder (5) is disposed on a side of the output bearing seat (3) near the carrier (1).

8. The reducer angular transmission accuracy tester according to claim 1, wherein the first torsionmeter (8) is disposed between the output end encoder (5) and the second motor (7).

9. The reducer angular transmission accuracy tester according to claim 1, further comprising a second torsionmeter (9), the second torsionmeter (9) being connected to the first motor (6), and the second torsionmeter (9) being disposed between the input end encoder (4) and the first motor (6).

10. The reducer angular transmission accuracy tester according to claim 1, wherein the input shaft (30) and the output shaft (60) are coaxial with each other.
